## Europäisches Patentamt
## European Patent Office
## Office européen des brevets

(19)

(11) Veröffentlichungsnummer: **0 000 878**
**B2**

(12) # NEUE EUROPÄISCHE PATENTSCHRIFT

(45) Veröffentlichungstag der neuen Patentschrift:
17.04.85

(51) Int. Cl.⁴: **F 16 K 35/02**, G 05 D 23/02

(21) Anmeldenummer: 78100568.1

(22) Anmeldetag: 02.08.78

(54) **Regelventil, insbesondere thermostatisch geregeltes Ventil.**

(30) Priorität: 17.08.77 DE 2737083

(43) Veröffentlichungstag der Anmeldung:
07.03.79 Patentblatt 79/5

(45) Bekanntmachung des Hinweises auf die Patenterteilung:
25.08.82 Patentblatt 82/34

(45) Bekanntmachung des Hinweises auf die Entscheidung über den Einspruch:
17.04.85 Patentblatt 85/16

(84) Benannte Vertragsstaaten:
BE CH FR GB NL SE

(56) Entgegenhaltungen:
DE - A - 2 038 368
DE - A - 2 064 019
DE - A - 2 158 950
DE - B - 2 220 340
DE - C - 732 411
FR - A - 2 004 658
FR - A - 2 169 566
FR - E - 92 539
GB - A - 1 126 439

(73) Patentinhaber: Honeywell-Braukmann GmbH,
Hardhofweg, D-6950 Mosbach/Baden (DE)

(72) Erfinder: Braukmann, Bernhard W., Am Rosenberg 1,
D-6950 Mosbach (DE)
Erfinder: Vollmer, Rudolf, Friedrich-Hölderlin-Strasse 23,
6950 Mosbach (DE)

(74) Vertreter: Rentzsch, Heinz et al, Honeywell Europe S.A.
Holding KG Patent- und Lizenzabteilung Postfach 184,
D-6050 Offenbach am Main (DE)

**Beschreibung**

Die Erfindung bezieht sich auf ein Regelventil, insbesondere ein thermostatisch geregeltes Ventil, mit einem Drehgriff zur Temperatureinstellung und einer federbelasteten auslösbaren Sperrvorrichtung zur Blockierung der Drehbewegung des Drehgriffs in vorgegebener Drehstellung, die aus einer unter Federwirkung einrastenden, in etwa radialer Richtung beweglichen Sperre zwischen dem Drehgriff und einem undrehbaren Ventil-Bauteil sowie einem radial im Drehgriff verschiebbaren Auslöser für die Sperre besteht. Ein derartiges Regelventil ist in Form eines thermostatisch geregelten Mischventils beispielsweise durch die FR-A-2 169 566 bekanntgeworden. Es dient zum Mischen von kaltem und heißem Wasser. Dabei stellt die auslösbare Sperrvorrichtung sicher, daß beim Öffnen dieses Ventils die Mischwassertemperatur zunächst über einen bestimmten Höchstwert nicht ansteigen kann, um Verbrühungen zu vermeiden. Wenn eine über diesen vorgegebenen Wert hinausgehende Temperatur des gemischten Wassers erwünscht ist, so muß zuvor die Sperre von Hand ausgelöst werden, d. h. ein anderes Mischungsverhältnis der beiden Ströme ist nur nach vorheriger Auslösung der Sperrvorrichtung möglich.

Es sind auch noch andere Ventile mit auslösbaren Rastvorrichtungen bekanntgeworden, deren Ziel es ebenfalls ist, das Verbrühen zu verhindern oder bei Ausführungen, die nicht zum Mischen zweier Medienströme dienen, die durchströmende Menge beispielsweise eines Gasstroms auf einen vorbestimmten Wert zu begrenzen. All diesen Ventilen ist jedoch gemeinsam, daß nach dem Auslösen der Sperrvorrichtung eine weitere Drehung um 360° möglich ist und die Ventilspindel zwei und mehr Umdrehungen ausführen kann.

Es gibt jedoch Regelprobleme, insbesondere für ein flüssiges Medium beispielsweise bei einer Haus-Heizungsanlage, wo die Ventilspindel maximal eine einzige Umdrehung ausführen kann, damit dieses Ventil auch als thermostatisch geregeltes Ventil benützt werden kann. Auch in solchen Fällen wäre es erwünscht, die Durchflußmenge bei einer bestimmten Öffnung des Ventils zu begrenzen und einen größeren Durchfluß erst nach Auslösung einer Sperrvorrichtung zu gestatten.

Die bekannten Regelventile bieten diese Möglichkeit nicht.

Die Aufgabe der Erfindung besteht infolgedessen darin, ein Regelventil der eingangs genannten Art so auszubilden, daß es auch für Hausheizungsanlagen eingesetzt werden kann, wobei die auslösbare Sperrvorrichtung besonders einfach, aber auch sehr zweckmäßig gestaltet sein soll.

Zur Lösung dieser Aufgabe wird erfindungsgemäß vorgeschlagen, daß das Regelventil gemäß dem Oberbegriff des Anspruchs 1 entsprechend dem kennzeichnenden Teil dieses Anspruchs ausgebildet ist. Der Einstellbereich ist auf höchstens eine Umdrehung der Spindel bzw. des Drehgriffs beschränkt, so daß bei Verwendung eines Thermostataufsatzes od. dgl. eine stets sichere Zuordnung der durchströmenden Menge zu der in Umfangsrichtung angebrachten Skala möglich ist. Andererseits kann aber die Drehbewegung nach einer vorgegebenen Teildrehung der Spindel beispielsweise nach einer 180°-Drehung blockiert werden, weswegen höhere Durchflußwerte, wie verlangt, nur erreichbar sind, wenn man zuvor die Sperre auslöst. Ordnet man dieser Blockierstellung beispielsweise einen Temperaturwert von 20°C zu, so stellt dieses Regelventil sicher, daß der Benutzer den mit einem solchen Regelventil ausgestatteten Raum nicht unnötigerweise überhitzt, sondern einen höheren Temperaturwert nur ganz gezielt, nämlich durch Lösen der Sperrvorrichtung erreichen kann. Wenn man bedenkt, daß beispielsweise eine Überhöhung der Raumtemperatur von 1°C einen Energiemehrverbrauch von etwa 6 Prozent zur Folge hat, so kann man den Wert und Vorteil dieses Regelventils leicht ermessen. Das Überheizen des Raumes wird mit diesem Regelventil selbst dann verhindert, wenn es, wie vielfach üblich, ungünstig plaziert beispielsweise hinter einem Vorhang montiert ist, so daß man die Einstellskala nicht oder nicht ohne weiteres einsehen kann. Bis zum Erreichen der Blockierstellung ist in der Regel ein Energieverschwendung nicht zu befürchten, und beim Einregulieren einer höheren Temperatur nimmt man sich dann zwangsläufig die Zeit, den Drehgriff genau auf den gewünschten Wert einzustellen.

Andererseits ist die Sperrvorrichtung von sehr einfacher Bauart, leicht zu montieren und ggf. auch zu reparieren. Auch das Auslösen der Sperre ist in bekannter Weise einfach und rasch zu bewerkstelligen. Des weiteren bietet die besondere Ausbildung dieser Sperrvorrichtung aufgrund ihrer speziellen Bauart die Möglichkeit, zumindest eine weitere bevorzugte Blockierstellung vorzusehen.

Eine Weiterbildung der Erfindung kennzeichnet sich dadurch, daß das federnde, zungenartige Anschlagglied einstückig mit dem Ring gebildet ist. Dies führt zu einer einfachen, robusten und preiswert zu fertigenden Ausführung.

In weiterer Ausgestaltung der Erfindung wird vorgeschlagen, daß zur drehfesten Verbindung des Rings mit dem undrehbaren Ventil-Bauteil an letzterem ein leistenförmiger Ansatz angebracht, insbesondere angeformt ist, den eine sickenartige Ausbuchtung des Rings übergreift. Dies ermöglicht nicht nur eine rasche, sondern auch eine genaue Montage des Rings am undrehbaren Ventil-Bauteil. Außerdem läßt sich diese Konstruktion in sehr vorteilhafter Weise noch dadurch zusätzlich nutzen, daß die sickenartige Ausbuchtung des offenen, aus federndem Metall gebildeten Rings in der vorgegebenen Drehstellung des Drehgriffs einem inneren Stützglied des Drehgriffs gegenüberliegt und man auf diese Weise eine einwandfreie Sicherung gegen ein Abspringen des offenen Rings beim Auslösen der Sperrvorrichtung erhält. Selbstverständlich befindet sich dabei das innere Stützglied in einem ganz geringen Abstand von der sickenartigen Ausbuchtung, die dem üblichen Spiel zwischen drehbaren Teilen entspricht, welche sich bei der normalen Drehung nicht berühren sollen.

Der Anschlag für das Anschlagglied ist gemäß einer weiteren Variante der Erfindung durch eine radiale Erhebung des Drehgriffs gebildet, die zugleich ein in beiden Drehrichtungen wirksamer Anschlag für die ein Doppelanschlagglied darstellende Ausbuchtung des Ringes ist. Inwieweit der Rückdreh-Anschlag ausgenutzt wird, hängt von der Konstruktion des Ventils im einzelnen ab.

Das zungenartige Anschlagglied trägt in weiterer Ausbildung der Erfindung eine nach außen abgewinkelte, unmittelbar mit dem Anschlag zusammenwirkende Nase. Sie stellt sicher, daß beim Weiterdrehen nach dem Auslösen der Sperrvorrichtung die Reibung innen am Drehglied minimal ist. Andererseits gewährleistet sie ein sicheres und genaues Verrasten.

Eine andere Ausgestaltung der Erfindung kennzeichnet sich dadurch, daß der Anschlag für das Anschlagglied durch die eine Wandinnenfläche eines den Auslöser aufnehmenden Auges des Drehgriffs gebildet ist und die gegenüberliegende Wandfläche des Auges als weiterer beim Drehen in Schließrichtung wirkender Anschlag für die Nase dient. Somit lassen sich zwei voneinander verschiedene Stellungen mit denselben Teilen blockieren und auslösen, denen im Falle eines Heizungsventils unterschiedliche Raumtemperaturen zugeordnet sind. Wieweit letztere voneinander wegliegen, hängt vom Abstand der beiden Wandflächen bzw. der Größe des Auges ab.

Eine weitere bevorzugte Ausführungsform der Erfindung kennzeichnet sich dadurch, daß in Öffnungs- und Schließrichtung gegenüber dem Auge des Drehgriffs versetzt am Innenumfang des Drehgriffs zwei Rastkerben vorgesehen sind, in welche die Nase des Anschlagglieds wahlweise in der einen oder anderen Drehendstellung des Drehgriffs einrastet. Der Betrag ihres gegenseitigen Abstands richtet sich nach der Lage der Ventilspindel in der Schließstellung einerseits und dem maximal möglichen Öffnungsgrad des Ventils andererseits.

Schließlich ist es auch noch sehr vorteilhaft, daß der Auslöser auf das freie Ende des zungenartigen Anschlagglieds zu gerichtet eine bzw. bei der Ausbildung gemäß Anspruch 7 zwei gegenläufig geneigte Auflaufschrägen für dieses freie Ende aufweist. Dadurch ist ein Überfahren des Auslösers durch das freie Ende des Anschlaggliedes in beiden Drehrichtungen und die automatische Einrastung beim Vor- und Zurückdrehen problemlos möglich.

In der Zeichnung sind Ausführungsbeispiele der Erfindung dargestellt. Es zeigt

Fig. 1 eine Draufsicht auf das erfindungsgemäße Regelventil,

Fig. 2 einen Schnitt gemäß der Linie II-II der Fig. 1,

Fig. 3 eine der Fig. 2 entsprechende Darstellung einer anderen Ausführungsform des Regelventils.

Beim Ausführungsbeispiel handelt es sich um ein thermostatisch geregeltes Heizkörperventil, dessen Drehgriff 1 mit einer Skala 2 versehen ist, die mit einer Markierung 3 eines undrehbaren Bauteils 4 des Ventils zusammenwirkt. Das Bauteil 4 braucht nicht notwendigerweise separat gefertigt sein, vielmehr kann es sich dabei auch um einen angeformten Gehäusestutzen handeln, an welchem der Drehgriff 1 unmittelbar gelagert ist. Wenn die Skalenmitte, also beispielsweise die Zahl »drei«, der Markierung 3 zugeordnet ist, so wird zum Beispiel eine Raumtemperatur von 20° C gehalten. Soll es im Raum wärmer werden, so muß der Markierung 3 die »vier« oder »fünf« der Skala zuordnen, während den Skalenwerten »eins« und »zwei« geringere Raumtemperaturen entsprechen. Ausgehend von der geschlossenen Stellung des Ventils, läßt sich der Drehgriff 1 wie bei jedem herkömmlichen Heizkörperventil bis hin zur vorgegebenen Marke uneingeschränkt drehen. Auf diese Weise kann man sehr schnell die bevorzugte Raumtemperatur bis vorzugsweise 20° C einstellen. Es bedarf hierzu keiner besonderen Sorgfalt und auch keiner Skalenablesung. Zweckmäßigerweise befindet sich die bevorzugte Skalenzahl, beim Ausführungsbeispiel also die »drei«, auf einem Auslöser 5, dessen Bedeutung nachfolgend noch erläutert wird.

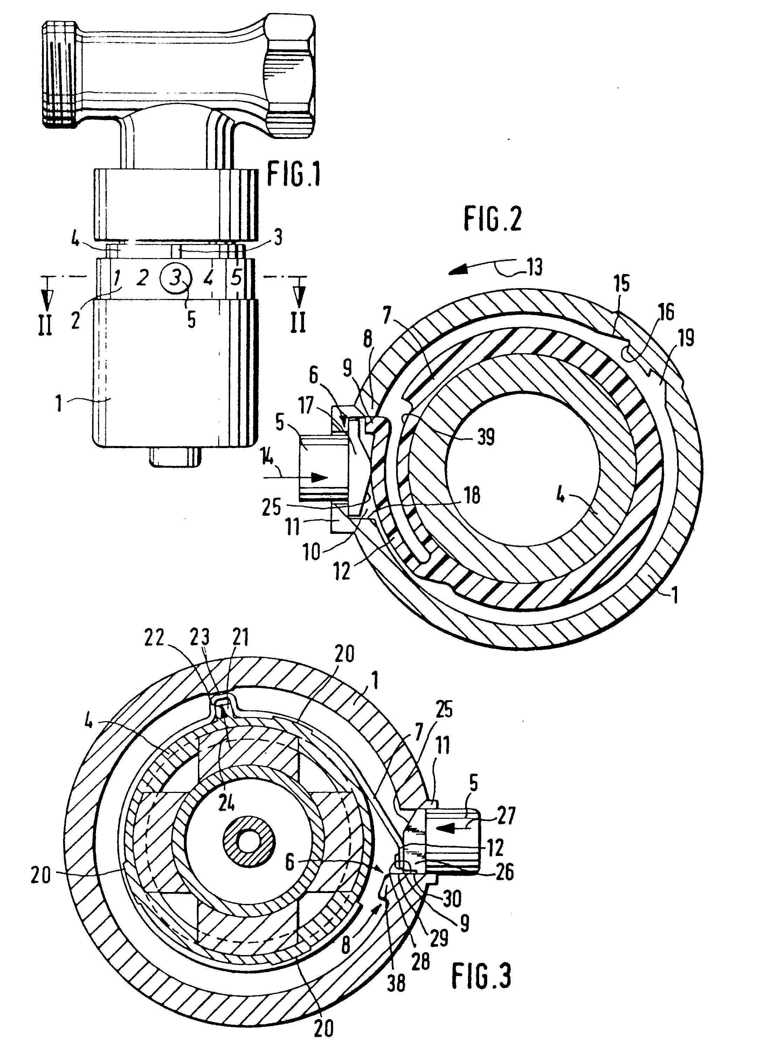

Verschiedene Ausführungsbeispiele der Sperrvorrichtung 6 für den bevorzugten Einstellwert gehen aus den Fig. 2 und 3 hervor. Jede besteht aus einem drehfest mit dem undrehbaren Bauteil 4 verbundenen, gehäusefesten Ring 7 und dem drehfest mit dem Drehgriff 1 verbundenen bewegbaren Anschlag 8. Eines der Teile 7, 8 besitzt eine radiale Erhebung 38 oder Ausnehmung 10, die mit einem Anschlag 9 des anderen Teils zusammenwirkt.

Beim Ausführungsbeispiel der Fig. 2 ist eine radiale Ausnehmung 10 an einem Auge 11 des Drehgriffs 1 vorgesehen, in die das innere Ende des Auslösers 5 hineinragt. Der Anschlag 9 wird durch das hakenartig gestaltete freie Ende eines in der Art einer Blattfeder geformten, insbesondere einstückig mit dem Ring 7 gefertigten Anschlagglieds 12 gebildet. Der Ring 7 kann beispielsweise aus Kunststoff hergestellt werden. Eine Drehung des Griffes 1 im Sinne des Pfeils 13 ist nur möglich, wenn man zuvor den Auslöser in Pfeilrichtung 14 betätigt. Sobald das Anschlagglied 9 freigekommen ist, läßt sich der Drehgriff 1 weiterdrehen, und man kommt dadurch zu den höheren Skalenwerten (Fig. 1) bzw. Temperaturen. Dieses Weiterdrehen kann durch geeignete Mittel beendigt werden, beispielsweise durch eine Rastkerbe 15 des Drehgriffs 1, die einen zweiten Anschlag 16 bildet und in welche das hakenartige Ende des Anschlagglieds 12 nach einer weiteren Drehbewegung um vorzugsweise etwa 90° eintritt.

Verstellt man den Drehgriff 1 entgegen dem Pfeil 13, so wird, ausgehend von der in Fig. 2 gezeigten bevorzugten Einstellung des Thermostatventils, das pfeilförmig gestaltete innere Ende 17 des Auslösers 5 vorbeibewegt, wobei das Anschlagglied 12 in die Ausnehmung 10 des Rings 7 ein- und daraus auch wieder austritt. Diese Drehbewegung endigt, wenn das Anschlagglied 9 auf der anderen Seite der radialen Ausnehmung angekommen ist, d. h. am Anschlag 18 für das rechteckig gestaltete innere Ende des Auslösers 5 anschlägt. Falls es erwünscht ist, kann man ein weiteres Zurückdrehen des Drehgriffs entgegen dem Pfeil 13 erreichen, wenn der Auslöser 5 nochmals betätigt wird. Eine weitere Rastkerbe 19 des Drehgriffs 1 beendigt diese Rückdrehung dann endgültig. Der Ring kann formschlüssig oder mit bekannten Befestigungsmitteln drehfest am Ventilbauteil 4 gehalten werden.

Die Ausführungsform der Fig. 3 ist in der Fig. 2 ähnlich, jedoch ist dort der Ring 7 als offener Ring ausgebildet und aus einem Stahlband gefertigt, wie man es für Blattfedern verwendet. Senkrecht zur Bildebene kann dieser Ring 7 durch angeformte Lappen 20 gehalten werden. Zur Verdrehsicherung dient ein leistenförmiger Ansatz 21 des undrehbaren Ventilbauteils 4, der von einer sickenartigen Ausbuchtung 22 des Rings 7 umfaßt wird. In der Blockierungsstellung der Sperrvorrichtung 6 liegt gegenüber dieser sickenartigen Ausbuchtung 22 ein Stützglied 23, welches an der Innenfläche der Drehgriffwandung angeformt ist. Sie verhindert ein radiales Ausweichen der Feder in Richtung des Pfeils 24, die beim Betätigen des Auslösers 5 stattfinden könnte.

Das Anschlagglied 12 ist bei dieser Ausführungsform durch das eine freie Ende des Rings 7 gebildet. Eine dem als Führungsfläche dienenden Anschlag 18 der Fig. 2 entsprechende Fläche ist bei dieser Variante nicht vorgesehen, weswegen der Drehgriff 1 hier ohne weiteres um einen Winkel von 90° und mehr zurückgedreht werden kann.

Das innere Ende des Auslösers 5 ist wiederum rechteckig gestaltet, und außerdem ist eine Auflaufschräge 25 für das Anschlagglied 9 vorgesehen. Eine zweite, in Fig. 3 schräg nach oben weisende Schrägfläche 26 dient der Montageerleichterung. Um ein Durchfallen des Auslösers 5 in Richtung des Pfeils 27 zu verhindern, befindet sich am inneren Ende der Führung 28 eine angeformte Leiste 29, die sich in Fig. 3 senkrecht zur Bildebene erstreckt. Sie wirkt mit einer Anschlagfläche 30 des Auslösers 5 zusammen. Gegen Herausziehen entgegen der Pfeilrichtung 27 ist der Auslöser 5 in bekannter Weise gesichert.

## Patentansprüche

1. Regelventil, insbesondere thermostatisch geregeltes Ventil, mit einem Drehgriff (1) zur Temperatureinstellung und einer federbelasteten, auslösbaren Sperrvorrichtung (6) zur Blockierung der Drehbewegung des Drehgriffes in vorgegebener Drehstellung, die aus einer unter Federwirkung einrastenden, in etwa radialer Richtung beweglichen Sperre zwischen dem Drehgriff (1) und einem undrehbaren Ventil-Bauteil (4) sowie einem radial im Drehgriff verschieblichen Auslöser (5) für die Sperre besteht, wobei der Drehgriff (1) einen Einstellbereich von höchstens einer Umdrehung aufweist und die vorgegebene Drehstellung eine etwa mittlere Drehstellung ist, und wobei die Sperre einen drehfest mit dem undrehbaren Ventil-Bauteil (4) verbundenen Ring (7) umfaßt, der als Anschlagglied dient und im Bereich des Auslösers (5) in der vorgegebenen Drehstellung an einem Anschlag des Drehgriffs (1) zur Anlage gelangt, gekennzeichnet durch folgende Merkmale:

a) das Ventil ist ein Heizkörperventil;
b) der Ring (7), der geschlossen oder offen ist, besteht aus Kunststoff oder einem Stahlband, und das Anschlagglied des Ringes wird durch eine radial nach außen ragende, federnde Zunge (9, 12) gebildet; und
c) der Anschlag (8) des Drehgriffs wird durch eine Wandinnenfläche eines den Auslöser (5) aufnehmenden Auges (11) in dem Drehgriff (1) gebildet.

2. Regelventil nach Anspruch 1, dadurch gekennzeichnet, daß die federnde Zunge (9, 12) einstückig mit dem Ring (7) gebildet ist.

3. Regelventil nach Anspruch 1 und 2, dadurch gekennzeichnet, daß zur drehfesten Verbindung des Rings (7) mit dem undrehbaren Ventil-Bauteil (4) an letzterem ein leistenförmiger Ansatz (21) angebracht ist, den eine sickenartige Ausbuchtung (22) des Rings (7) übergreift.

4. Regelventil nach Anspruch 3, dadurch gekennzeichnet, daß die sickenartige Ausbuchtung (22) des offenen, aus federndem Stahlband gebildeten Rings (7) in der vorgegebenen Drehstellung des Drehgriffs (1) einem inneren Stützglied (23) des Drehgriffs gegenüberliegt.

5. Regelventil nach Anspruch 3 oder 4, dadurch gekennzeichnet, daß der Anschlag (8) für das Anschlagglied (12) durch eine radiale Erhebung (38) an einer Wandfläche des Auges (11) des Drehgriffs (1) gebildet ist, die zugleich ein in beiden Drehrichtungen wirksamer Anschlag für die ein Doppelanschlagglied darstellende Ausbuchung (22) des Ringes (7) ist.

6. Regelventil nach Anspruch 1 oder 2, dadurch gekennzeichnet, daß in Öffnungs- und Schließrichtung gegenüber dem Auge (11) des Drehgriffs (1) versetzt am Innenumfang des Drehgriffs zwei Rastkerben (15, 19) vorgesehen sind, in welche eine Nase des Anschlagglieds (9) wahlweise in der einen oder anderen Drehendstellung des Drehgriffs einrastet.

7. Regelventil nach Anspruch 6, dadurch gekennzeichnet, daß der Auslöser (5) auf das freie Ende der federnden Zunge (9, 12) ausgerichtet ist.

**Claims**

1. Control valve, in particular thermostatically controlled valve, comprising a rotatable knob (1) for temperature adjustement and a spring biased releasable stop means (6) for blocking the rotational movement of the knob at a predetermined rotational position, said means consisting of a stop between the rotatable knob (1) and a non-rotatable valve component (4) with said stop being engageable under spring action by a radial movement and said means further consisting of a release (5) for the stop with said release being radially displaceable in the knob, whereat the rotatable knob (1) has a maximum range of adjustment of one turn and the predetermined rotational position approximately corresponds to a center rotational position and whereat the stop consists of a ring (7) being non-rotatably fixed at the non-rotatable valve component (4) which serves as a stop member and abuts in the predetermined position against a stop of the rotatable knob (1) in the area of the release (5), characterized by the following features:

a) the valve is a radiator valve;
b) the ring (7) which is closed or open is made of plastic or steel strip and the stop member of the ring is formed by a tongue (9, 12) resiliently extending raidally outwards; and .
c) the stop (8) of the rotatable knob is formed by an inner wall face of a lug (11) of the rotatable knob (1) receiving the release (5).

2. Control valve according to claim 1, characterized in that the resilient tongue (9, 12) forms one piece with the ring (7).

3. Control valve according to claim 1 or 2, characterized in that for the non-rotational connection of the ring (7) with the non-rotatable valve component (4) said component comprises a ridge-shaped projection (21), which is engaged by a crimp-shaped throat (22) of the ring (7).

4. Control valve according to claim 3, characterized in that the crimp-shaped throat (22) of the open ring (7) made of resilient steel strip in the predetermined rotational position of the knob (1) is opposite to an inner supporting member (23) of the rotatable knob.

5. Control valve according to claim 3 or 4, characterized in that the stop (8) for the stop member (12) is formed by a radial projection (38) at the wall face of the lug (11) of the rotatable knob (1) with said projection at the same time being active as a stop in both rotational directions for the throat (22) of the ring (7) forming a double stop member.

6. Control valve according to claim 1 or 2, characterized in that in opening and closing direction offset with respect to the lug (11) two latch grooves (15, 19) are provided in spaced relationship at the inner circumference of the rotatable knob (1) with which a nose of the stop member (9) randomly is latched in the one or other rotational end position of the rotatable knob.

7. Control valve according to claim 6, characterized in that the release (5) is directed to the free end of the resilient tongue (9, 12).

**Revendications**

1. Vanne de réglage, notamment vanne réglée thermostatiquement, comportant une poignée tournante (1) pour le réglage de la température et un dispositif de verrouillage déclenchable (6) sollicité par ressort et servant au blocage du mouvement de rotation de la poignée dans une position angulaire prédéterminée, qui se compose d'un verrou s'enclenchant sous l'action d'un ressort, mobile dans une direction à peu près radiale et disposé entre la poignée tournante (1) et une partie non tournante (4) de la vanne ainsi qu'un déclencheur (5) pour le verrou, qui est déplaçable radialement dans la poignée tournante, la poignée tournante (1) comportant une plage des réglage correspondant au maximum à une révolution et la position angulaire prédéterminée étant une position angulaire à peu près centrale, tandis que le verrou comporte un anneau (7) qui est relié sans possibilité de rotation relative sur une partie non tournante (4) de la vanne, et qui sert d'organe de butée et vient s'appliquer dans la position angulaire prédéterminée et dans la zone du déclencheur (5), contre une butée de la poignée (1), caractérisée par les points suivants:

a) la vanne est une vanne de radiateur;
b) l'anneau (7), qui est ouvert ou fermé, est réalisé en matière plastique ou en une bande d'acier, et la butée de l'anneau est constituée par une languette radiale élastique (9, 12) s'infléchissant vers l'extérieur; et
c) la butée (8) de la poignée est constituée par une face intérieure de paroi d'un oeillet (11) recevant le déclencheur (5) à l'intérieur de la poignée (1).

2. Vanne de réglage selon la revendication 1, caractérisée en ce que la languette élastique (9, 12) forme une seule et même pièce avec l'anneau (7).

3. Vanne de réglage selon la revendication 1 ou 2, caractérisée en ce que pour assurer une liaison sans possibilité de rotation relative de l'anneau (7) avec le composant non tournant (4) de la vanne, il est prévu sur ce dernier, une saillie (21) en forme de moulure et qui s'accroche dans une ondulation formant rainure (22) de l'anneau (7).

4. Vanne de réglage selon la revendication 3, caractérisée en ce que l'ondulation formant rainure (22) de l'anneau ouvert (7) formé d'une bande d'acier élastique est disposée, dans la position angulaire prédéterminée de la poignée tournante (1), en regard d'un organe intérieur d'appui (23) de la poignée.

5. Vanne de réglage selon la revendication 3 ou 4, caractérisée en ce que la butée (8) de l'organe de butée (12) est constituée par une saillie radiale (38) sur une face de paroi de l'oeillet (11) de la poignée (1), qui constitue simultanément une butée, agissant dans les deux sens de rotation, pour l'évidement (22) représentant un organe double de butée, de l'anneau (7).

6. Vanne de réglage selon la revendication 1 ou 2, caractérisée en ce qu'il est prévu, sur la périphérie intérieure de la poignée tournante, deux encoches d'arrêt (15, 19) décalées dans la direction d'ouverture et de fermeture par rapport à l'oeillet (11) de la poignée et dans lesquelles s'accroche un nez de l'organe de butée (9) sélectivement dans l'une ou l'autre position angulaire limite de la poignée.

7. Vanne de réglage selon la revendication 6, caractérisée en ce que le déclencheur (5) est monté sur l'extrémité libre de la languette élastique (9, 12).

FIG.1

FIG.2

FIG.3